# EUROPÄISCHE PATENTSCHRIFT

(11) **EP 2 421 933 B1**
(45) Veröffentlichungstag und Bekanntmachung des Hinweises auf die Patenterteilung: **03.12.2014**
(21) Anmeldenummer: 10724250.5
(22) Anmeldetag: 23.04.2010
(51) Int. Cl.: C10G 1/10, C10B 53/07

(54) **VERFAHREN ZUR UMWANDLUNG VON KOHLENSTOFFHALTIGEN ABFALLPRODUKTEN**
METHOD FOR CONVERTING CARBONACEOUS WASTE PRODUCTS
PROCÉDÉ DE TRANSFORMATION DE DÉCHETS CARBONÉS

(30) Priorität: 23.04.2009 DE 102009018514
(43) Veröffentlichungstag der Anmeldung: 29.02.2012
(73) Patentinhaber: Guschl, Dietmar, 39435 Borne (DE)
(72) Erfinder: Guschl, Dietmar, 39435 Borne (DE)
(74) Vertreter: Lins, Martina
(86) Internationale Anmeldenummer: PCT/DE2010/000481
(87) Internationale Veröffentlichungsnummer: WO 2010/121609

(56) Entgegenhaltungen:
- WO-A1-94/09977
- GB-A- 2 280 451
- US-A- 5 608 136
- US-B1- 6 777 581

## Beschreibung

Die Erfindung betrifft ein Verfahren zur Umwandlung von kohlenstoffhaltigen, verketteten oder vernetzten Abfallprodukten zu Wertstoffen durch Pyrolyse, bei dem die in einen Reaktor geladenen Abfallprodukte in einem geschlossenen System erhitzt und nach einer Behandlungszeit abgekühlt werden.

Die als Pyrolyse bekannte thermische Behandlung von Abfallprodukten unter Luftabschluss ist bekannt. Aufgrund des fehlenden Sauerstoffs findet eine Verbrennung der Abfallprodukte nicht statt, sondern die Abfallprodukte werden durch die thermische Behandlung reduzierend umgewandelt. Die umgewandelten Reststoffe sind allerdings regelmäßig nicht als Wertstoffe einsetzbar, sondern können allenfalls als niederwertige, granulierte Feststoffe, pulverförmige Zusatzstoffe usw. Verwendung finden. Bei der Pyrolyse von kohlenstoffhaltigen Abfallprodukten, zu denen im Rahmen der vorliegenden Erfindung insbesondere kohlenwasserstoffhaltige Abfallprodukte zählen, soll als Wertstoff reiner Kohlenstoff entstehen.

Es ist vorgeschlagen worden, auch Altreifen, vorzugsweise zusammen mit den Felgen, einer Pyrolysebehandlung zu unterziehen, um aus den Altreifen einen halbwegs reinen Kohlenstoff zu gewinnen. Eine übliche Pyrolysebehandlung, bei der die thermische Umsetzung der Temperaturen zwischen 500 und 800°C vorgenommen wird, führt nicht zu einer Gewinnung von einem reinen Kohlenstoff, der zur Herstellung eines Kohlenstoffprodukts verwendbar wäre. Die Reinheitsgrade liegen bei etwa 70 %. Darüber hinaus tritt regelmäßig das Problem von in größeren Mengen auftretenden Abgasen auf, die Schadstoffe enthalten können und daher erst nach einer sorgfältigen Filterung in die Umgebung abgegeben werden dürfen.

GB 2 280 451 A offenbart ein Verfahren zur Versprödung und anschließenden Mahlen von Produkten, die Kunststoff oder Gummi enthalten, wie beispielsweise Faltenbälge, Dichtungen oder Autoreifen. In einem Reaktor werden die Abfallprodukte einer Vakuumbehandlung unterzogen und dann auf eine Temperatur > 250°C aufgeheizt, um die Versprödung des Materials zu bewirken. Dabei werden durch die beibehaltene Absaugung durch die Vakuumpumpe Gase abgeführt und verarbeitet. Konkrete Aufheiz- und Behandlungstemperaturen werden nicht-angegeben.

WO 94/09977 A1 offenbart ein Verfahren zum Zusammenpressen gestapelter Autoreifen, die im zusammengepressten Zustand in einen Reaktor geladen werden. Der Reaktor wird dann evakuiert, um Sauerstoff zu entfernen. Es erfolgt eine ständige Aufheizung bis auf unterschiedliche Endtemperaturen von 460°C oder 260°C. Das aus dem Reaktor abgezogene Pyrolysegas wird kondensiert und weiterverarbeitet bis das Kohlenmaterial aus dem Behälter entnommen werden kann. Auch bei diesem Verfahren ist für die Evakuierung des Behälters ein zusätzlicher Aufwand erforderlich.

Der vorliegenden Erfindung liegt die Aufgabe zugrunde, ein Verfahren der eingangs erwähnten Art so auszugestalten, dass behandlungsbedürftige Abgase nicht in nennenswerten Mengen auftreten und darüber hinaus eine Wertstoffgewinnung, insbesondere von Kohlenstoff, mit einem hohen Reinheitsgrad möglich ist.

Die Lösung dieser Aufgabe gelingt bei einem Verfahren der eingangs erwähnten Art durch folgende Verfahrensschritte:
- die Abfallprodukte werden in dem Reaktor auf eine Aufheiztemperatur T_{A} von 310°C ≤ T_{A} ≤ 350°C aufgeheizt,
- der Reaktor wird dann auf eine Behandlungstemperatur von 310 ± 30°C eingestellt und auf dieser Behandlungstemperatur gehalten,
- beim Aufheizen des Reaktors bis auf eine Temperatur von 130 ± 20°C wird das aus dem Reaktor austretende Gas kondensiert und als Kondenswasser abgeleitet, danach wird das aus dem Reaktor austretende Gas (Pyrolysegas) durch Kühlung und Entspannung zu einem Pyrolyseöl kondensiert,
- sobald kein Pyrolysegas mehr entsteht, wird der Reaktor auf wenigstens 90°C abgekühlt und entleert.

Das erfindungsgemäße Verfahren verwendet somit eine relativ niedrige Pyrolyse-Behandlungstemperatur, die erfindungsgemäß relativ schnell angesteuert wird, wobei eine Aufheiztemperatur T_{A} von 350°C nicht überschritten wird. Umfangreiche Versuchsreihen haben ergeben, dass diese ungewöhnliche Temperaturführung wesentlich ist, um aus den

Abfallprodukten, beispielsweise aus Altreifen, einen sehr reinen Kohlenstoff zu gewinnen, dessen Reinheitsgrad über 80 % liegt, üblicherweise in einer Spanne von 83 bis 88 %. Das bei dem Verfahren anfallende Pyrolyseöl, das aus der erfindungsgemäßen Pyrolyse von Altreifen gewonnen wird, hat Eigenschaften von Heizöl und ist somit unmittelbar als Wertstoff verwendbar. Der mit dem erfindungsgemäßen Verfahren aus Altreifen gewonnene reine Kohlenstoff ist ohne weitere Behandlung zur Herstellung von Kohlenstofffiltern, Kohlenstoffabsorbern und als Hitze- und Feuerisolierung verwendbar.

Das erfindungsgemäße Verfahren wird vorzugsweise so durchgeführt, dass der mit den Abfallprodukten ohne jede Vorbehandlung beladene Reaktor in einer Heizkammer erhitzt wird, in der er an ein Gasabführungssystem angeschlossen wird, das außerhalb der Heizkammer mit einem Kühlsystem verbunden wird, um die Kondensation des Pyrolysegases zu einem Pyrolyseöl vorzunehmen. Dabei ist es zweckmäßig, wenn die Temperatur in dem Gasführungssystem außerhalb der Heizkammer gemessen wird. Insbesondere ist es damit möglich, ein kontinuierliches Abfallen der Temperatur in dem Gasführungssystem unter einen vorgegebenen Wert als Signal für die Beendigung der Pyrolyse zu verwenden. Der Temperaturabfall ist ein Indikator dafür, dass durch das Gasführungssystem immer weniger Pyrolysegas hindurchgeleitet wird. Wenn aber praktisch kein Pyrolysegas mehr entsteht, findet auch keine Umwandlung der Abfallprodukte durch die Pyrolyse mehr statt. Demzufolge kann aus dem Temperaturabfall unter einen vorgegebenen Wert, der unter 100°C liegen sollte und beispielsweise bei größenordnungsgemäß 80°C liegen kann, auf das Ende des Pyrolysevorgangs geschlossen werden.

Der Beginn des erfindungsgemäßen Verfahrens erfolgt vorzugsweise dadurch, dass der beladene Reaktor in die auf eine Vorheiztemperatur > 200°C vorgeheizte Heizkammer eingefahren wird. Die Verwendung der auf diese Weise vorgeheizten Heizkammer hat den Vorteil, dass eine Energieeinsparung möglich ist, wie unten noch näher erläutert werden wird.

Der an das Gasabführungssystem angeschlossene Reaktor wird in der Heizkammer, deren Heizsystem aktiv geschaltet ist, aufgeheizt. In der Anfangsphase wird das aus dem Reaktor ausgetriebene Gas, das im Wesentlichen aus Luft und Wasser besteht, nicht über das Kühlsystem zur Gewinnung des Pyrolyseöls geführt, sondern in einer Abzweigleitung als Kondenswasser abgeführt. Erst wenn die Temperatur über 130 ± 20°C gestiegen ist, wird das Gasabführungssystem an das Kühlsystem angeschlossen, um bei dem bei etwa 230°C im Reaktor beginnenden Pyrolysevorgang aus dem nunmehr entstehenden Pyrolysegas Pyrolyseöl zu gewinnen. Das Aufheizen des Reaktors wird beispielsweise mit einer Heiztemperatur der Heizkammer von 420 ± 20°C in einer Zeit zwischen 2 und 4 Stunden, vorzugsweise etwa 3 Stunden vorgenommen, wobei die Heizkammer für eine vorgegebene Zeitdauer, die vorzugsweise zwischen 0,5 und 1,5 Stunden, bevorzugt bei etwa 1 Stunde, liegt, auf der Heiztemperatur gehalten wird. Danach wird die Heizung in der Heizkammer abgeschaltet, bis die Behandlungstemperatur von 310 ± 20°C erreicht worden ist. Dann wird diese Behandlungstemperatur in dem Reaktor konstant gehalten, bis das Ende der Pyrolyse in der oben beschriebenen Weise festgestellt wird. Optional kann nach dem Ende der Pyrolyse eine kurzzeitige Aufheizung (bis zu einer Stunde) des Reaktorinhalts bis zu 600°C erfolgen, um einen Trocknungsvorgang zu beschleunigen. Im Anschluss daran wird der Reaktor aus der Heizkammer entfernt und an ein eigenes Kühlsystem außerhalb der Heizkammer angeschlossen, um so auf eine Temperatur unter 90°C, vorzugsweise unter 70°C abgekühlt zu werden, sodass die Entleerung des Behälters erfolgen kann.

Durch das Öffnen der Heizkammer und den Austausch des heißen Reaktors gegen eine neuen beladenen Reaktor fällt die Temperatur in der Heizkammer von der Behandlungstemperatur auf ca'. 250°C ab, die somit als Vorheiztemperatur für den nächsten Pyrolyse-Behandlungsprozess dient. Unnötige Abkühlungen und Wärmeverluste werden dadurch vermieden, dass mit austauschbaren Reaktoren für dieselbe Heizkammer gearbeitet wird. Vorzugsweise werden für jede Heizkammer drei Reaktoren verwendet, von denen einer nach dem Pyrolyseprozess abkühlt, ein anderer in die Heizkammer eingefahren wird und ein dritter zur Beladung mit Abfallprodukten zur Verfügung steht.

Für die Gewinnung von Wertstoffen mit einem hohen Reinheitsgrad ist es wichtig, einen Reaktor mit einer Beladung zu verwenden, die die Einhaltung des angegebenen Temperaturverlaufs ohne Schwierigkeiten ermöglicht. Die Beladung des Reaktors sollte mit etwa 400 bis 800, vorzugsweise 500 bis 600 kg, Abfallprodukten erfolgen. Als Abfallprodukte werden insbesondere Altreifen auf ihren Felgen behandelt. Die Trennung des beim Pyrolysevorgang entstandenen reinen Kohlenstoffs von den Metallfelgen erfolgt somit nach der Entleerung des Reaktors und ist ohne Schwierigkeiten wegen der unterschiedlichen Konsistenzen der Wertstoffe möglich. Beispiele für geeignete Abfallprodukte sind Kokosnussschalen, Ebonitmaterial, wie es für Batteriegehäuse verwendet wird, sowie organische Abfälle, wie zellulosehaltige Materialien, tierische Abfälle, Essensreste, geschreddertes Holz, Holzpellets o. dgl.

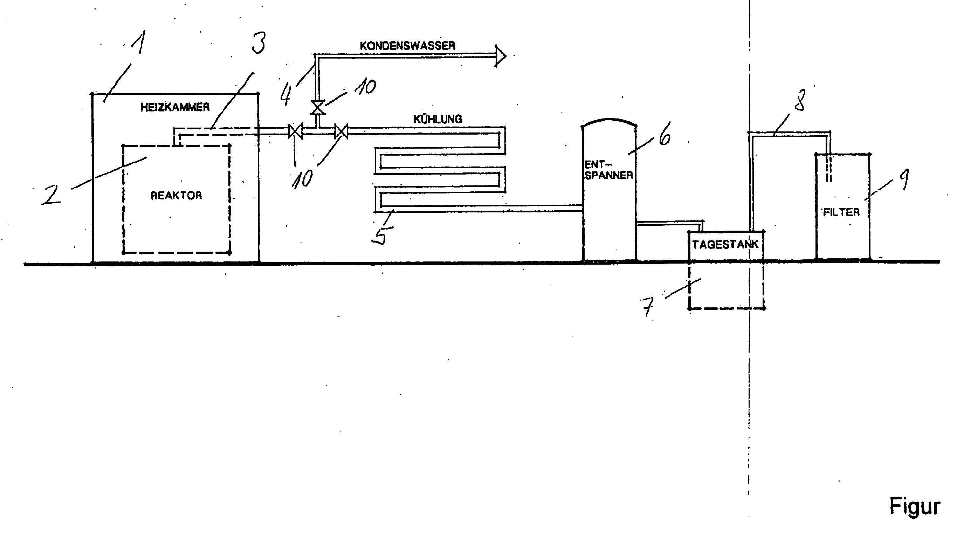

Die beigefügte einzige Zeichnungsfigur zeigt schematisch den Aufbau einer Anlage zur Durchführung des erfindungsgemäßen Verfahrens. In eine fest montierte, als Ofen ausgebildete Heizkammer 1 wird ein vorzugsweise fahrbar ausgebildeter, mit kohlenstoffhaltigen, insbesondere kohlenwasserstoffhaltigen, Abfallprodukten beladener Reaktor 2 eingefahren und an ein Gasabführungssystem 3 angeschlossen, mit dem Gas aus der Heizkammer 1 in einen Außenraum geleitet werden kann. Das Gasabführungssystem 3 weist außerhalb der Heizkammer einen Abzweig 4, mit dem beim Aufheizen des Reaktors 2 bis zu einer Temperatur von ca. 130°C aus dem Reaktor 2 ausgetriebene Luft und Feuchtigkeit als Kondenswasser abgeleitet werden kann. Das Gasabführungssystem 3 leitet für die Normalfunktion das Gas aus dem Reaktor 2 über ein Kühlsystem 5, mit dem das Gas abgekühlt wird. Im Anschluss daran gelangt das Gas in einen Entspannungsbehälter 6, in dem es sich als Pyrolyseöl sammelt. Das Pyrolyseöl gelangt aus dem Entspannungsbehälter 6 in einen Tank 7, aus dem das Pyrolyseöl ohne weitere Behandlung entnehmbar ist. Der Tank 7 ist über Gasleitung 8 an seiner Oberseite mit einem Gasfilter 9 verbunden, über den geringe Luftmengen, die nicht zu einem Pyrolyseöl kondensieren können, in die Umgebung abgelassen werden können.

Die Zeichnung lässt noch erkennen, dass für die Umschaltung des Gasabführungssystems 3 in die Kondenswasserableitung 4 einerseits oder die Kühlung 5 andererseits eine Anordnung von Absperrventilen 10 vorgesehen ist, die manuell betätigt werden oder sensorgesteuert umschaltbar sind.

Vorzugsweise werden mehrere fahrbare Reaktoren 2 für eine Heizkammer 1 verwendet, um eine durch möglichst kleine Pausen unterbrochene Verfahrensweise zu ermöglichen.

Der Pyrolyseprozess vom Einfahren des Reaktors 2 in die Heizkammer bis zum Entleeren des Reaktors nach einer Abkühlung außerhalb der Heizkammer 1 beträgt ca. 8 Stunden, wenn eine Beladung des Reaktors 2 mit Abfallprodukten in einer Masse von 500 bis 600 kg vorgesehen wird.

## Patentansprüche

1. Verfahren zur Umwandlung von kohlenstoffhaltigen, verketteten oder vernetzten Abfallprodukten zu Wertstoffen durch Pyrolyse, bei dem die in einen Reaktor (2) geladenen Abfallprodukte in einem geschlossenen System erhitzt und nach einer Behandlungszeit abgekühlt werden, mit folgenden Verfahrensschritten
- die Abfallprodukte werden in dem Reaktor (2) auf eine Aufheiztemperatur T_{A} von 310C ≤ T_{A} ≤ 350°C aufgeheizt,
- der Reaktor (2) wird dann auf eine Behandlungstemperatur von 310 ± 30°C eingestellt und auf dieser Behandlungstemperatur gehalten,
- beim Aufheizen des Reaktors (2) bis auf eine Temperatur von 130 ± 20°C wird das aus dem Reaktor (2) austretende Gas kondensiert und als Kondenswasser abgeleitet, danach wird das aus dem Reaktor (2) austretende Gas (Pyrolysegas) durch Kühlung und Entspannung zu einem Pyrolyseöl kondensiert,
- sobald kein Pyrolysegas mehr entsteht, wird der Reaktor (2) auf wenigstens 90°C abgekühlt und entleert.

2. Verfahren nach Anspruch 1, **dadurch gekennzeichnet, dass** der beladene Reaktor (2) in einer Heizkammer (1) erhitzt wird, in der er an ein Gasabführungssystem (3) angeschlossen wird, das außerhalb der Heizkammer (1) mit einem Kühlsystem (5) verbunden wird.

3. Verfahren nach Anspruch 2, **dadurch gekennzeichnet, dass** die Temperatur in dem Gasabführungssystem (3) außerhalb der Heizkammer (1) gemessen wird.

4. Verfahren nach Anspruch 3, **dadurch gekennzeichnet, dass** ein kontinuierliches Abfallen der Temperatur in dem Gasabführungssystem (3) unter einen vorgegebenen Wert als Signal für die Beendigung der Pyrolyse verwendet wird.

5. Verfahren nach einem der Ansprüche 1 bis 4, **dadurch gekennzeichnet, dass** der mit den Abfallprodukten beladene Reaktor (2) in die auf eine Vorheiztemperatur > 200°C vorgeheizte Heizkammer (1) eingefahren wird.

6. Verfahren nach einem der Ansprüche 1 bis 5, **dadurch gekennzeichnet, dass** die Aufheizung auf die Aufheiztemperatur T_{A} in einer Zeit zwischen 2 und 4 Stunden vorgenommen wird.

7. Verfahren nach Anspruch 6, **dadurch gekennzeichnet, dass** die Aufheizung auf die Aufheiztemperatur T_{A} in einer Zeit von 3 Stunden vorgenommen wird.

8. Verfahren nach einem der Ansprüche 1 bis 7, **dadurch gekennzeichnet, dass** die Einstellung auf die Behandlungstemperatur innerhalb der Heizkammer (1) durch Abschaltung der Heizung vorgenommen wird.

9. Verfahren nach einem der Ansprüche 1 bis 8, **dadurch gekennzeichnet, dass** der Reaktor (2) unmittelbar nach dem festgestellten Ende der Pyrolyse aus der Heizkammer (1) entfernt und außerhalb der Heizkammer (1) an ein externes Kühlsystem für aus dem Reaktor (2) austretende Gase angeschlossen wird.

10. Verfahren nach einem der Ansprüche 2 bis 9, **dadurch gekennzeichnet, dass** die bei der Entnahme des Reaktors (2) und Einfahren eines neuen Reaktors von der Behandlungstemperatur abgefallene Temperatur als die Vorheiztemperatur verwendet wird.

11. Verfahren nach Anspruch 10, **dadurch gekennzeichnet, dass** die Vorheiztemperatur bei 250 ± 20°C liegt.

12. Verfahren nach einem der Ansprüche 9 bis 11, **dadurch gekennzeichnet, dass** die Abkühlung des Reaktors (2) außerhalb der Heizkammer (1) auf ≤ 70°C erfolgt und dass der Reaktor (2) anschließend entladen wird.

13. Verfahren nach einem der Ansprüche 1 bis 12, **dadurch gekennzeichnet, dass** als Abfallprodukte Altreifen verwendet werden.

14. Verfahren nach einem der Ansprüche 1 bis 13, **dadurch gekennzeichnet, dass** die Beladung des Reaktors (2) mit 400 bis 800 kg, vorzugsweise 500 bis 600 kg, Abfallprodukten erfolgt.

## Claims

1. Method for converting carbonaceous, catenated or crosslinked waste products to reusable materials by pyrolysis, wherein the waste products charged to a reactor (2) are heated in a closed system and cooled after a treatment time, with the following method steps:
- the waste products are heated in the reactor (2) to a heating temperature Tₕ of 310°C ≤ Tₕ ≤ 350°C,
- the reactor (2) is then set to a treatment temperature of 310 ± 30°C and maintained at that treatment temperature,
- when the reactor (2) is heated to a temperature of 130 ± 20°C, the gas emerging from the reactor (2) is condensed and taken off as condensed water, after which the gas emerging from the reactor (2) (pyrolysis gas) is condensed by cooling and depressurization to give a pyrolysis oil,
- as soon as pyrolysis gas is no longer formed, the reactor (2) is cooled to at least 90°C and emptied.

2. Method according to Claim 1, **characterized in that** the, charged reactor (2) is heated in a heating chamber (1) in which it is connected to a gas removal system (3) which outside the heating chamber (1) is joined to a cooling system (5).

3. Method according to Claim 2, **characterized in that** the temperature in the gas removal system (3) outside the heating chamber (1) is measured.

4. Method according to Claim 3, **characterized in that** a continuous falling of the temperature in the gas removal system (3) below a specified value is used as a signal for the ending of the pyrolysis.

5. Method according to any of Claims 1 to 4, **characterized in that** the reactor (2) charged with the waste products is advanced into the heating chamber (1) preheated to a preheating temperature > 200°C.

6. Method according to any of Claims 1 to 5, **characterized in that** the heating to the heating temperature Tₕ is performed in a time of between 2 and 4 hours.

7. Method according to Claim 6, **characterized in that** the heating to the heating temperature Tₕ is performed in a time of 3 hours.

8. Method according to any of Claims 1 to 7, **characterized in that** the setting to the treatment temperature within the heating chamber (1) is performed by shutting off the heating.

9. Method according to any of Claims 1 to 8, **characterized in that** the reactor (2), immediately after the ascertained end of the pyrolysis, is removed from the heating chamber (1) and outside the heating chamber (1) is connected to an external cooling system for gases emerging from the reactor (2).

10. Method according to any of Claims 2 to 9, **characterized in that** the temperature falling from the treatment temperature during withdrawal of the reactor (2) and advancement of a new reactor is used as the preheating temperature.

11. Method according to Claim 10, **characterized in that** the preheating temperature is 250 ± 20°C.

12. Method according to any of Claims 9 to 11, **characterized in that** the cooling of the reactor (2) to ≤ 70°C takes place outside the heating chamber (1) and **in that** the reactor (2) is subsequently discharged.

13. Method according to any of Claims 1 to 12, **characterized in that** used tyres are employed as waste products.

14. Method according to any of Claims 1 to 13, **characterized in that** the reactor (2) is charged with 400 to 800 kg, preferably 500 to 600 kg, of waste products.

## Revendications

1. Procédé pour la conversion de produits de rebut contenant du carbone, chaînés ou réticulés pour donner des matières premières par pyrolyse, dans lequel les produits de rebut chargés dans un réacteur (2) sont chauffés dans un système fermé et refroidis après un temps de traitement, comprenant les étapes de procédé suivantes
- les produits de rebut sont chauffés dans le réacteur (2) à une température de chauffage T_{A} de 310° C ≤ T_{A} ≤ 350° C,
- le réacteur (2) est alors réglé à une température de traitement de 310 ± 30° C et maintenu à cette température de traitement,
- lors du chauffage du réacteur (2) jusqu'à une température de 130 ± 20° C, le gaz sortant du réacteur (2) est condensé et évacué à titre d'eau condensée, et ensuite le gaz sortant du réacteur (2) (gaz de pyrolyse) est condensé par refroidissement et détente pour donner une huile de pyrolyse,
- dès qu'il ne se produit plus de gaz de pyrolyse, le réacteur (2) est refroidi à moins de 90° C et vidé.

2. Procédé selon la revendication 1, **caractérisé en ce que** le réacteur chargé (2) est chauffé dans une chambre le chauffage (1) dans laquelle il est branché à un système d'évacuation de gaz (3) qui est relié à un système de refroidissement (5) à l'extérieur de la chambre de chauffage (1).

3. Procédé selon la revendication 2, **caractérisé en ce que** la température est mesurée dans le système d'évacuation de gaz (3) à l'extérieur de la chambre de chauffage (1).

4. Procédé selon la revendication 3, **caractérisé en ce que** l'on utilise une chute continue de la température dans le système d'évacuation de gaz (3) au-dessous d'une valeur prédéterminée à titre de signal pour la terminaison de la pyrolyse.

5. Procédé selon l'une des revendications 1 à 4, **caractérisé en ce que** le réacteur (2) chargé avec les produits de rebut est entré dans la chambre de chauffage (1) préchauffée à une température de préchauffage > 200° C.

6. Procédé selon l'une des revendications 1 à 5, **caractérisé en ce que** le chauffage à la température de chauffage T_{A} est exécuté en un temps entre 2 et 4 heures.

7. Procédé selon la revendication 6, **caractérisé en ce que** le chauffage à la température de chauffage T_{A} est exécuté en un temps de 3 heures.

8. Procédé selon l'une des revendications 1 à 7, **caractérisé en ce que** le réglage de la température de traitement à l'intérieur de la chambre de chauffage (1) et exécuté par coupure du chauffage.

9. Procédé selon l'une des revendications 1 à 8, **caractérisé en ce que** le réacteur (2) est éloigné de la chambre de chauffage (1) immédiatement après constatation de la fin de la pyrolyse et est branché à l'extérieur de la chambre de chauffage (1) à un système de refroidissement externe pour les gaz sortants du réacteur (2).

10. Procédé selon l'une des revendications 2 à 9, **caractérisé en ce que** l'on utilise comme température de préchauffage la température qui a chuté depuis la température de traitement lors de l'enlèvement du réacteur (2) et de l'entrée d'un nouveau réacteur.

11. Procédé selon la revendication 10, **caractérisé en ce que** la température de préchauffage est vers 250 ± 20° C.

12. Procédé selon l'une des revendications 9 à 11, **caractérisé en ce que** le refroidissement du réacteur (2) a lieu à l'extérieur de la chambre de chauffage (1) jusqu'à < 70° C, et **en ce que** le réacteur (2) est ensuite vidé.

13. Procédé selon l'une des revendications 1 à 12, **caractérisé en ce que** l'on utilise des vieux pneumatiques à titre de produits de rebut.

14. Procédé selon l'une des revendications 1 à 13, **caractérisé en ce que** le chargement du réacteur (2) a lieu avec 400 à 800 kg, de préférence 500 à 600 kg, de produits de rebut.
